# EUROPÄISCHE PATENTANMELDUNG

(11) **EP 1 792 777 A1**
(43) Veröffentlichungstag der Anmeldung: **06.06.2007**
(21) Anmeldenummer: 06022694.1
(22) Anmeldetag: 31.10.2006
(51) Int. Cl.: B60Q 1/50

(54) **Fahrzeug mit Anhängermeldeanzeige**

(30) Priorität: 30.11.2005 DE 102005057017
(71) Anmelder: Geiger, Georg, 97250 Erlabrunn (DE)
(72) Erfinder: Geiger, Georg, 97250 Erlabrunn (DE)
(74) Vertreter: Pöhner, Wilfried Anton, Dr.

(57) **Zusammenfassung**

Fahrzeug (1) mit Anhängermeldeanzeige (3), an welches wenigstens ein Anhänger (2) ankuppelbar ist, wobei an einer Außenseite des Fahrzeuges (1), bevorzugt an dem in Fahrtrichtung vorderen Bereich, wenigstens eine Anhängermeldeanzeige (3) angeordnet ist, die aus wenigstens einem optischen Anzeigeelement (3) zur Meldung des Vorhandenseins von einem Anhänger (2) besteht, und sich in Form und/oder Farbe und/oder Anbringungsort von den anderen Anzeigen an der Außenseite (1a) des Fahrzeuges (1) unterscheidet.

## Beschreibung

Die Erfindung bezieht sich auf ein Fahrzeug mit Anhängermeldeanzeige, an welches wenigstens ein Anhänger ankuppelbar ist.

Nach aktuellem Stand der Technik wird z.B. in Deutschland das Vorhandensein eines Anhängers am Fahrzeug nur in den Innenraum hinein mit einer darauf spezialisierten Anzeige verdeutlicht, nämlich einer zusätzlichen Kontrollleuchte, welche bei Betätigung eines Fahrtrichtungsanzeigers, also den umgangssprachlich als "Blinker" bezeichneten Leuchten an der Außenseite des Fahrzeuges, auch innen aufleuchtet.

Nach dem bisherigen Stand der Technik wird nach außen hin das Vorhandensein eines Anhängers bisher nur an seiner Rückseite gekennzeichnet In einigen Ländern wird durch die Vorschrift , bei sehr langen Fahrzeugen an der Rückseite eine Tafel mit der Aufschrift "long vehicle" anzubringen, indirekt auf das Vorhandensein von Anhängern hingewiesen. In Deutschland gehört es zur Straßenverkehrszulassungsordnung, dass ein Fahrzeuganhänger an seiner Rückseite jeweils zwei rote, lichtreflektierende Dreiecke aufweist.

Gemäß dem aktuellen Stand der Fahrzeugtechnik sind bei der Mehrzahl der Lastkraftwagen die Rückseite des Zugfahrzeuges und des Anhängers nach Form, Funktion und Beleuchtung identisch, bis auf die beiden vorerwähnten, roten Dreiecke. Da Zugfahrzeug und Anhänger bei Lastkraftwagen auch häufig die gleiche Größe aufweisen, ist von der Rückseite her auch nur an diesen beiden Dreiecken erkennbar, ob man einen erheblich längeren Lastzug oder nur das kürzere Zugfahrzeug ohne Anhänger vor sich hat. Diese Information ist für das Verkehrsgeschehen durchaus relevant, insbesondere beim Überholen eines Schleppzuges auf zweispurigen Straßen.

Die Ausführung der für diese roten Dreiecke verwendeten, reflektierenden Materialien durch zahlreiche, kleine, aneinandergereihte Prismen aus semitransparentem, rot eingefärbtem Material mit einer reflektierenden Beschichtung auf der Rückseite entspricht dem allseits bekannten Stand der Technik.

Dazu zählen auch Reflexionsfolien, bei denen die Oberfläche mit sehr kleinen, ebenfalls transparenten Kugeln beschichtet ist.

Eine weitere, millionenfach verbreitete Ausführungsform von Anzeigeelementen an den Außenseiten der Fahrzeuge sind Blinkleuchten, Bremsleuchten, Schlussleuchten und Seitenleuchten. Die Mehrzahl dieser Leuchten besteht bisher aus wenigstens einer Glühbirne, die von einem Reflektor umgeben ist, welcher sich auf den Glühfaden der Birne als optischen Mittelpunkt ausrichtet und einer Abdeck- und Streuscheibe, die die Lichtstrahlen färbt und zum Teil durch Ausbildung kleiner Linsen auch noch in ihrem Strahlengang homogenisiert.

Diese Form der Außenleuchten wird seit einigen Jahren ergänzt durch Leuchtdioden. Diese lichtabstrahlenden, halbleitenden Elemente beinhalten neben dem lichterzeugendem Bauteil meist auch zusätzlich einen kleinen Reflektor, sodass ihr Licht nur in einer Vorzugsrichtung abgestrahlt wird. In der Regel bestehen Außenleuchten an Fahrzeugen aus einer Vielzahl von flächig aneinander gereihten Leuchtdioden. Mit der Auswahl des halbleitenden Materials wird das Licht im Gegensatz zur Glühlampe in der gewählten Farbe monochrom abgestrahlt. Vorteile der LED im Vergleich zur Glühbirne sind ein erheblich besserer Wirkungsgrad, längere Lebensdauer, eine geringere Einbautiefe des lichtabstrahlenden Elementes und dadurch die gestalterische Möglichkeit, eine lichtabstrahlende Fläche auch auf nicht vollkommen ebenen Flächen anbringen zu können.

Durch diese Vorzüge bieten sich Leuchtdioden als ein bevorzugtes Element für die Ausführung von erfindungsgerechten Anhängermeldeanzeigen an.

Im Verkehrsgeschehen ist es nicht nur beim Überholen eines Fahrzeuges wichtig, schon im voraus zu wissen, wie viele Anhänger daran angekuppelt sind, sondern auch an Verkehrskreuzungen. Insbesondere dann, wenn die tatsächlich vorhandenen Anhänger durch Gebäude, Bewuchs oder andere Fahrzeuge verdeckt sind, kann es zum Teil fatale Folgen haben, wenn die Länge eines Fahrzeuges, das die eigene Fahrtrichtung beispielsweise kreuzt, unterschätzt wird. Hier besteht das Risiko, dass ein Verkehrsteilnehmer die Geschwindigkeit seines Fahrzeuges darauf einstellt, dass ein von der Seite her die eigene Fahrtrichtung kreuzendes, weiteres Fahrzeug nach einer bestimmten Zeit die Fahrbahn wieder verlassen hat. Wenn sich erst nachträglich derweil das Fahrzeug sich schon mitten auf der Fahrbahn befindet, herausstellt, dass es durch Anhänger doch erheblich länger ist, können sich daraus sehr schwere Unfälle ergeben.

Die Erfindung hat sich deshalb die Aufgabe gestellt, Fahrzeuge, an die ein Anhänger ankuppelbar ist, in ihrem vorderen Bereich mit einer Anzeige zu versehen, durch welche von den Seiten des Fahrzeuges her gesehen, optisch sofort deutlich wird, dass an das Fahrzeug Anhänger angekuppelt sind.

In einer Ausführungsvariante soll zusätzlich erkennbar werden, dass an dieses Fahrzeug überhaupt Anhänger ankuppelbar sind.

Die Erfindung löst diese Aufgabe dadurch, dass an einer Außenseite des Fahrzeuges, bevorzugt an dem in Fahrtrichtung vorderen Bereich, wenigstens eine Anhängermeldeanzeige angeordnet ist, die aus wenigstens einem optischen Anzeigeelement zur Meldung des Vorhandenseins von einem Anhänger besteht.

Für die Technologie eines geeigneten Anzeigeelementes sind gemäß dem aktuellen Stand der Technik verfügbare, selbstleuchtende oder Licht reflektierende Elemente beschrieben worden. Eine weitere Möglichkeit für eine Außenanzeige an Fahrzeugen sind Flächen mit unterschiedlicher Farbe. Da Anhänger an Fahrzeuge jedoch mit geringem Aufwand ankuppelbar und wieder abkuppelbar sind, liegt es nicht im Sinne der Erfindung, eine Kennzeichnung des Fahrzeuges durch aufgemalte Symbole vorzunehmen. Vielmehr ist die schnelle Veränderbarkeit der Anzeige ein wesentlicher Grundgedanke der Erfindung. Dafür sind Anzeigeelemente bekannt, bei denen durch eine oder mehrere im Raster angeordnete mechanisch bewegte Klappen entweder die Vorder- oder die Rückseite eines Plattenabschnittes sichtbar gemacht wird.

Eine sehr einfache Ausführungsform besteht aus einer Anzeigetafel, die mit geeigneten Befestigungsmitteln an der Fahrzeugaußenseite angeordnet wird. Bei Metallkarosserien ist eine Ausführung als magnetisch haftendes Element möglich. Denkbar sind auch mechanische Führungen, in die tafelförmige Elemente eingeschoben werden oder klappbare Elemente, die entweder eine farblich abgesetzte Vorderseite sichtbar werden lassen oder ihre Rückseite zeigen, welche wenigstens mit einer sehr unauffälligen Farbe beschichtet sein muss oder im Idealfall die gleiche Farbe wie die umgebende Fläche aufweist.

Denkbar wäre auch, dass das Anhängermeldeanzeige durch einen Schlitz von der Oberfläche zurückgezogen wird oder hinter eine Klappe verborgen wird.

In der Dunkelheit müsste eine solche Anhängermeldeanzeige in jedem Fall angemessen beleuchtet werden. Daraus ergibt sich die Notwendigkeit einer elektrischen und/oder elektronischen Beleuchtung.

Daher liegt es nahe, die Anhängermeldeanzeige bevorzugt selbstleuchtend zu gestalten. Die millionenfach verbreiteten Blinkleuchten von Fahrzeugen sind ein bekanntes Beispiel dafür, dass auf diese Weise eine ausreichende Sichtbarmachung einer Anzeige am Fahrzeug möglich ist.

Eine sehr einfache Form einer erfindungsgemäßen Anhängermeldeanzeige besteht also darin, dass an den Seitenflächen des Fahrzeuges eine Meldeleuchte dann aufleuchtet, wenn wenigstens ein Anhänger angekuppelt ist. In einer erweiterten Ausführungsform leuchtet für jeden angekuppelten Anhänger jeweils eine eigene Anzeige auf.

Es liegt nahe, dafür Bauelemente zu verwenden, die bereits heute als Seitenleuchten verfügbar sind. Hierzu bedarf es jedoch einer allgemein gültigen und für sämtliche Verkehrsteilnehmer verfügbaren Definition, welche Aussage diesen zusätzlichen, bisher nicht bekannten Leuchten zuzuordnen ist. Als ein einfaches Unterscheidungskriterium empfiehlt die Erfindung deshalb eine für Anzeigen bisher kaum benutzte Farbe wie z.B. Grün.

Da erfahrungsgemäß jedoch auch der Bekanntheitsgrad von Gesetzesvorschriften für den Straßenverkehr in der Praxis wohl nie die wünschenswerten 100 % erreicht, sondern zum Teil dramatisch darunter liegt, schlägt die Erfindung in einer weiteren Ausführungsform vor, dass die Anzeigen zusätzlich auch als Botschaft abstrahlen, welche Fragestellung durch ihre Aktivierung und Passivierung überhaupt beantwortet wird. Die Lösung dieser Aufgabe ist die Darstellung einer Silhouette des Schleppzuges. Die einfachste Form für die Darstellung eines Anhängers ist ein Rechteck, das an seiner Unterkante mit zwei Halbkreisen für die Darstellung der Räder versehen ist.

Eine alternative Ausführungsform ist es, der Darstellung der Anhänger noch die ebenso symbolhafte Darstellung des Zugfahrzeuges hinzuzufügen. Dessen Darstellung sollte vorzugsweise die Fahrtrichtung erkennen lassen. Dafür bietet sich die Neigung einer Seitenkante des Rechteckes, also ein Trapez, als Symbolisierung einer geneigten Windschutzscheibe an oder/und die Ausformung eines kleinen Fortsatzes an der unteren Hälfte der Vorderkante. Dieser Zusatz wird in Analogie zu weit verbreiteten Bauformen von Personenwagen und Lastkraftwagen schnell als Motorhaube verstanden und damit als ein eindeutiges Indiz dafür gewertet, dass es zum einen ein Fahrzeug ist und zum Zweiten in die Richtung des Fortsatzes fährt.

Das Vorhandensein eines zusätzlichen Symbols für das Zugfahrzeug kann die Information aussenden, dass dieses Fahrzeug zwar mit einer Anhängerkupplung und einer Anhängermeldeanzeige ausgerüstet ist, jedoch derzeit keinen Anhänger zieht. Das ist insbesondere dann sinnvoll, wenn es entweder keine allgemeinverbindliche gesetzliche Vorschrift dafür gibt oder eine solche Regelung eingeführt wird. Wenn zum Beispiel ein Zugfahrzeug bereits aus einer Toreinfahrt herausgefahren ist und sich direkt davor befindet, dann ist nicht erkennbar, ob es Anhänger zieht oder nicht. Falls sämtliche Fahrzeuge zwangsläufig mit einer Anhängermeldeanzeige ausgerüstet sein müssten, dann würde es ausreichen, ein derzeitiges Fehlen von Anhängern durch passiven Zustand der Anhärigermeldeanzeige nach außen hin zu signalisieren. Wenn jedoch nur einige Fahrzeuge damit ausgerüstet sind, ist es sinnvoll, den anderen Verkehrsteilnehmern durch ein aktiviertes Zugfahrzeugsymbol zu melden, das eine Anhängermeldeanzeige vorhanden ist und funktioniert, dass aber derzeit keine Anhänger angekuppelt sind. Dann kann auch bei geringer Verbreitung der Anhängermeldeanzeige die Information abgestrahlt werden, dass ein Fahrzeug, das im aktuellen Zeitpunkt aus einem nicht einsehbaren Bereich heraus fährt, derzeit keinen Anhänger mitführt, also im Moment relativ kurz ist

In einer weiteren, vorteilhaften Ausführungsform wird vorgeschlagen, auch an der Vorderfront eine erfindungsgemäße Anhängermeideanzeige anzubringen. Diese Anzeige ist dann nützlich, wenn der vordere Seitenbereich des Fahrzeuges abgedeckt ist oder ein anderer Verkehrsteilnehmer bereits so nahe herangekommen ist, dass er die Seite nicht mehr im vollen Blickfeld hat.

In einer anderen, vorteilhaften Gestaltungsvariante führt auch der letzte Anhänger eine ebensolche Anzeige. Sie könnte die bisher üblichen, roten Dreiecke ergänzen oder ersetzen. Als zusätzliche Information würde dadurch z.B. einem Überholer eine Information über die zu erwartende Länge des zu überholenden Fahrzeuges gegeben.

Insbesondere dann, wenn die Anzeigelemente die Form einer Fahrzeugsilhouette aufweisen und dadurch selbsterklärend sind, ist es möglich, diese modellhaft verkleinerten Silhouetten aus plattenförmigem Material auszuschneiden und außerhalb der Silhouette des tatsächlichen Fahrzeuges zu montieren. Eine Möglichkeit zur Aktivierung besteht dann darin, dass die ausgeschnittenen Silhouetten aufgesteckt oder mit Haftmagneten an Blechflächen angesetzt werden. Möglich ist es auch, die Silhouette durch einen Schlitz fernbetätigt anzuheben. Zur zusätzlichen Sichtbarmachung in der Dunkelheit kann die Symbolfläche entweder reflektierend oder selbstleuchtend ausgeformt werden.

Weitere interessante Ausführungsformen ergeben sich dadurch, dass die Anhängermeldeanzeige auf deutlich abgegrenzten Baugruppen des Fahrzeuges angeordnet ist. Die Erfindung nennt dafür die Außenrückspiegel, die Stoßfänger, die Kotflügel, die Blinkleuchten, die Seitenleuchten, die Seitenfenster, die Fahrzeugunterkante oder das Fahrzeugdach. Eine bauliche Integration in eines dieser Bauelemente würde zusätzliche Kosten für die Anzeige sehr stark begrenzen und damit die Verbreitung unterstützen.

Eine weitere Kostenersparnis ergibt sich dadurch, dass die Anhängermeldeanzeige die Funktion der seitlichen Blinkleuchten und/oder der seitlichen Begrenzungsleuchten mit ausführen. Für eine sichere Aktivierung der Anzeigen empfiehlt die Erfindung eine automatische Aktivierung mit dem Ankuppeln eines jeden Anhängers, z.B. über die Steckdose für die Beleuchtung des Anhängers.

Im Folgenden sollen weitere Einzelheiten und Merkmale der Erfindungen anhand von Beispielen näher erläutert werden. Diese sollen die Erfindung jedoch nicht einschränken, sondern nur erläutern. Es zeigt in schematischer Darstellung:
- **Figur 1**: Schleppzug mit 2 Anhängern
- **Figur 2**: Anhängermeldeanzeige in Form einer Fahrzeugsilhouette

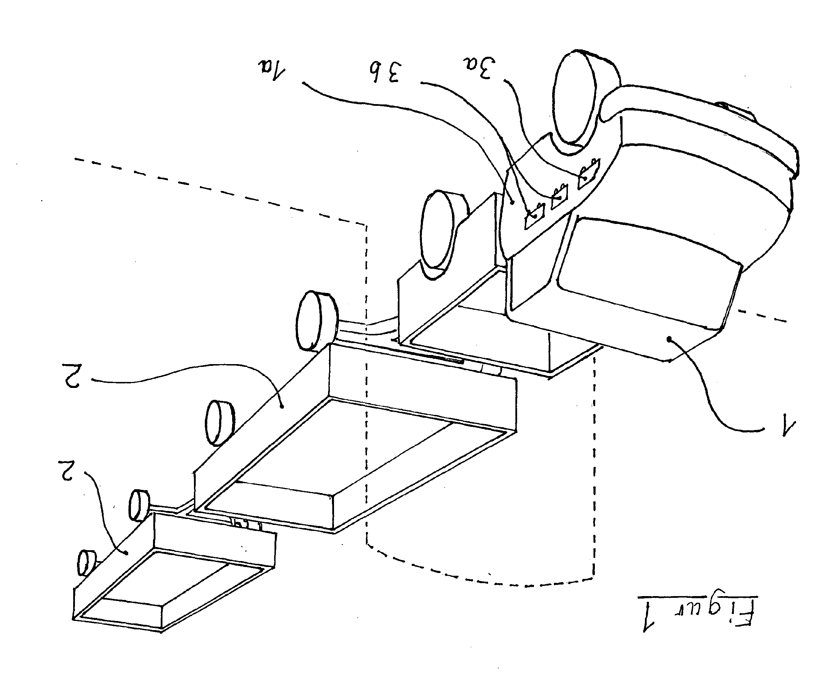

In Figur 1 ist die dreidimensionale Darstellung eines Zugfahrzeuges 1 hier mit zwei Anhängern 2 zu sehen. Das Fahrzeug 1 trägt an seiner linken Außenseite 1 a eine Anhängermeldeanzeige 3, bestehend aus einem Zugfahrzeugsymbol 3a und zwei Anhängersymbolen 3b. Im dargestellten Fall sind alle drei Anzeigen hell eingezeichnet, weil das Fahrzeug über eine Anhängermeldeanzeige verfügt und für deren Meldung das Zugfahrzeugsymbol 3a aktiviert und (weil zwei Anhänger angekuppelt sind) beide, vorhandenen Anhängersymbole 3b aktiviert. In Figur 1 ist mit einer gestrichelten Linie eine Toreinfahrt eines Gebäudes dargestellt, aus welchem der Schleppzug bereits soweit herausgefahren ist, dass sich das Fahrzeug 1 außerhalb des Gebäudes und im sichtbaren Bereich befindet. Nachvollziehbar ist, dass ein Verkehrsteilnehmer in dieser Position nur mittels der beiden Anhängersymbole 3b erkennen kann, dass im dargestellten Fall tatsächlich zwei Anhänger 2 angekuppelt sind.

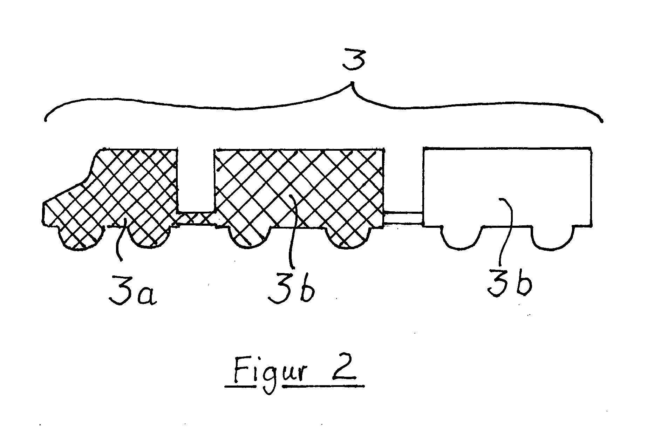

In Figur 2 ist ein Beispiel für die symbolische Darstellung einer Fahrzeugsilhouette als Anhängermeldeanzeige 3 wiedergegeben. Das Zugfahrzeugsymbol 3a weist mit seiner geneigten Vorderkante im oberen Bereich und dem daraus hervorstehenden, unteren Bereich auf ein motorisiertes Fahrzeug 1 hin, welches in Figur 2 nach links fährt. Die beiden dargestellten Anhängersymbole 3b bestehen erfindungsgemäß aus je einem Rechteck mit zwei Halbkreisen an der Unterkante.

Das Zugfahrzeugsymbol 3a und das mittlere Anhängersymbol 3b sind kreuzschraffiert, um darzustellen wie die Anzeige für den Fall aussieht, dass ein Fahrzeug eine maximale Kapazität von zwei Anhängern 2 aufweist, im aktuellen Fall jedoch nur einen angekuppelt hat.

Die in Figur 2 dargestellte Variante entspricht einer in der deutschen Landwirtschaft häufig vorkommenden Betriebsart.

### Bezugszeichenliste

- 1: Fahrzeug
- 1a: seitliche Außenfläche
- 2: Anhänger
- 3: Anhängermeldeanzeige
- 3a: Zugfahrzeugsymbol, für Fahrzeug 1
- 3b: Anhängersymbol, für Anhänger 2

## Patentansprüche

1. Fahrzeug 1 mit einer Anhängermeldeanzeige 3, an welches wenigstens ein Anhänger 2 ankuppelbar ist, **dadurch gekennzeichnet, dass** an einer Außenseite 1a des Fahrzeuges 1, bevorzugt an dem in Fahrtrichtung vorderen Bereich, wenigstens eine Anhängermeldeanzeige 3 angeordnet ist, die aus wenigstens einem optischen Anzeigeelement zur Meldung des Vorhandenseins von einem Anhänger 2 besteht.

2. Fahrzeug 1 mit Anhängermeldeanzeige 3 nach Anspruch 1 **dadurch gekennzeichnet, dass** je eine Anhängermeldeanzeige 3 an den beiden Seiten und/oder an der Vorderfront des Fahrzeuges 1 angeordnet ist.

3. Fahrzeug 1 mit Anhängermeldeanzeige 3 nach Anspruch 1, **dadurch gekennzeichnet, dass** ein gleichartiges Anzeigeelement 3 auch an der Rückfront des jeweils letzten, eingekuppelten Anhängers 2 angeordnet ist.

4. Fahrzeug 1 mit Anhängermeldeanzeige 3 nach Anspruch 1, **dadurch gekennzeichnet, dass** die Anhängermeldeanzeige 3 mehrteilig ausgebildet ist, wobei in bevorzugter Weise ein Teil als Zugfahrzeugsymbol 3a die Form der seitlichen Silhouette eines Fahrzeuges 1 und wenigstens ein weiteres Teil als Anhängersymbol 3b die Form der seitlichen Silhouette eines Anhängers 2 aufweist, wobei die Anzahl der aktivierten Anzeigesymbole 3b für Anhänger 2 der Anzahl der tatsächlich angekuppelten Anhänger 2 entspricht.

5. Fahrzeug 1 mit Anhängermeldeanzeige 3 nach Anspruch 4, **dadurch gekennzeichnet, dass** die Silhouetten
- als Tafel mit Flächen unterschiedlicher Farbe und/oder Helligkeit aufgebaut sind und/oder
- als beleuchtbare Fläche aufgebaut sind und/oder
- aus plattenförmigem Material ausgeschnitten und vom Fahrzeugkörper abgesetzt angeordnet sind und/oder
- lichtreflektierend beschichtet sind.

6. Fahrzeug 1 mit Anhängermeldeanzeige 3 nach einem der vorhergehenden Ansprüche, **dadurch gekennzeichnet, dass** die Anhängermeldeanzeige 3 bei Aktivierung die Farbe Grün aufweist.

7. Fahrzeug 1 mit Anhängermeldeanzeige 3 nach einem der vorhergehenden Ansprüche, **dadurch gekennzeichnet, dass** die Anhängermeldeanzeige 3 auf deutlich abgegrenzten Baugruppen des Fahrzeuges 1 angeordnet ist, wie z.B.
- den Außenrückspiegeln oder
- den Stoßfängern oder
- den Kotflügeln oder
- den Blinkleuchten oder
- den Seitenleuchten oder
- den Seitenfenstern oder
- der Fahrzeugunterkante oder
- dem Fahrzeugdach.

8. Fahrzeug 1 mit Anhängermeldeanzeige 3 nach Anspruch 4, **dadurch gekennzeichnet, dass** durch das Ankuppeln eines weiteren Anhängers 2 jeweils ein weiteres Anhängersymbol 3b selbsttätig aktivierbar ist.

9. Fahrzeug 1 mit Anhängermeldeanzeige 3 nach einem der vorhergehenden Ansprüche, **dadurch gekennzeichnet, dass** durch die Anhängermeldeanzeige 3 die Funktion der seitlichen Blinkleuchten und/oder der seitlichen Begrenzungsleuchten mit ausführbar ist.
